# DEMANDE DE BREVET EUROPEEN

(11) **EP 2 907 408 A1**
(43) Date de publication de la demande: **19.08.2015**
(21) Numéro de dépôt: 15154176.0
(22) Date de dépôt: 06.02.2015
(51) Int. Cl.: A44B 11/25, B60R 22/10

(54) **Dispositif pour ceinture de sécurité**

(30) Priorité: 14.02.2014 FR 1451179
(71) Demandeur: Moulages Plastiques du Midi, 31600 Muret (FR)
(72) Inventeur: Leenhardt, Christophe, 73490 La Ravoire (FR)
(74) Mandataire: Cabinet Morelle & Bardou SC

(57) **Abrégé**

Ce dispositif pour ceinture de sécurité comporte :
- une première aile (2) s'étendant selon une première direction,
- une seconde aile (4) s'étendant selon une seconde direction sensiblement perpendiculaire à la première direction,
- une ligne de jonction (6) entre la première aile (2) et la seconde aile (4),
- une première fente (8) réalisée dans la première aile (2), ladite première fente (8) étant sensiblement parallèle à la ligne de jonction (6) et débouchant dans un bord de la première aile (2),
- une deuxième fente (12) réalisée dans la seconde aile (4), ladite deuxième fente (12) étant sensiblement parallèle à la ligne de jonction (6), et
- une troisième fente (14) également réalisée dans la seconde aile (4), sensiblement parallèle à la deuxième fente (12) et plus éloignée de la ligne de jonction (6) que la deuxième fente (12).

## Description

La présente invention concerne un dispositif pour ceinture de sécurité, destiné notamment à une ceinture de sécurité d'un véhicule automobile.

Dans un véhicule automobile, il est courant d'avoir une ceinture de sécurité équipant chaque place assise dudit véhicule. Ces ceintures sont le plus souvent du type trois points, c'est-à-dire qu'elles présentent trois points d'ancrage à chaque place. En position "ouverte", la ceinture de sécurité présente une sangle qui est fixée à deux points d'ancrage et en position "fermée" ou "de sécurité", un troisième ancrage est réalisé à l'aide d'un système de verrouillage comportant un pêne et une gâche. Le pêne est monté coulissant sur la sangle de la ceinture et est destiné à coopérer avec la gâche fixée à la structure du véhicule. Le verrouillage du système est assuré en introduisant simplement le pêne dans la gâche tandis qu'un bouton de déverrouillage permet un déverrouillage manuel en exerçant une pression sur celui-ci.

Il convient généralement de veiller à laisser un accès au bouton de déverrouillage d'une ceinture de sécurité afin de pouvoir retirer la ceinture rapidement en cas de danger, notamment suite à un accident. Toutefois, il convient également d'éviter dans certains cas des déverrouillages intempestifs, par exemple lorsque les passagers sont des enfants ou bien des personnes présentant des handicaps particuliers. Il est alors admis que le risque est plus grand de ne pas être attaché que de ne pas pouvoir se détacher rapidement en cas d'accident.

Il existe des dispositifs destinés à éviter un déverrouillage involontaire d'un système de verrouillage d'une ceinture de sécurité.

On connaît ainsi par exemple du document WO-2009/041939 un boitier pour attache de ceinture de sécurité s'adaptant sur l'attache d'un harnais de siège pour enfant. Ce boitier se verrouille de manière à empêcher un enfant de presser de manière accidentelle ou délibérée sur un bouton de déverrouillage du harnais. Il convient alors d'ouvrir le boitier, de placer celui-ci sous l'attache du harnais du siège, d'attacher les sangles du harnais de manière habituelle puis de fermer le boitier et le verrouiller à l'aide d'un cliquet.

Le document EP-0 927 525 divulgue quant à lui un dispositif de sécurité pour une boucle de ceinture de siège de véhicule, ladite boucle comprenant une languette (pêne) portée par la ceinture de siège, un corps (gâche) ayant un logement formé à l'intérieur pour recevoir la languette et un bouton de libération. Le dispositif de sécurité comprend un élément de couverture pour recouvrir le bouton de libération de la boucle. Cet élément de couverture peut pivoter vers l'extérieur pour permettre l'accès au bouton de libération.

La présente invention a pour but de perfectionner les dispositifs existants de l'art antérieur. Un premier but est de fournir un dispositif qui soit de structure simple en étant toutefois fiable lors de son utilisation.

Pour faciliter son utilisation, il est bien entendu préférable de pouvoir utiliser ce dispositif sur une ceinture de sécurité sans avoir à modifier celle-ci. Avantageusement, il pourra s'adapter à tout type de ceinture, tant au niveau de la sangle que du dispositif de verrouillage (pêne et gâche).

Du point de vue de son ergonomie, il sera aussi avantageusement peu encombrant et/ou d'utilisation simple. Il pourra de préférence rester en place sur une sangle de ceinture dans une position donnée de manière à éviter d'avoir à effectuer un réglage à chaque utilisation du dispositif.

Le dispositif pourra en outre assurer avantageusement un blocage de la sangle de la ceinture de sécurité de manière à bloquer un coulissage de cette sangle.

À cet effet, la présente invention propose un dispositif pour ceinture de sécurité qui, selon la présente invention, comporte :
- une première aile s'étendant selon une première direction,
- une seconde aile s'étendant selon une seconde direction sensiblement perpendiculaire à la première direction,
- une ligne de jonction entre la première aile et la seconde aile,
- une première fente réalisée dans la première aile, ladite première fente étant sensiblement parallèle à la ligne de jonction et débouchant dans un bord de la première aile,
- une deuxième fente réalisée dans la seconde aile, ladite deuxième fente étant sensiblement parallèle à la ligne de jonction, et
- une troisième fente également réalisée dans la seconde aile, sensiblement parallèle à la deuxième fente et plus éloignée de la ligne de jonction que la deuxième fente.

Il convient de comprendre ici que les deux ailes, dites sensiblement perpendiculaires, forment entre elles un angle compris entre 45° et 135°. L'angle formé entre ces deux ailes est de préférence légèrement obtus, par exemple compris entre 100° et 115°.

Cette configuration est particulièrement avantageuse car tout en étant simple elle permet de limiter efficacement l'accès à une gâche d'un système de verrouillage de ceinture de sécurité. En introduisant les deux brins d'une sangle de ceinture de sécurité dans la première fente de la première aile puis en passant le pêne du système de verrouillage à travers la deuxième fente, le dispositif peut ainsi être solidarisé à la ceinture de sécurité. Le verrouillage de la ceinture se fait alors pour ainsi dire comme si le dispositif n'était pas présent. Une fois le système verrouillé, la gâche est recouverte par la seconde aile qui assure la sécurité et garantit tout accès involontaire à la gâche et à ses moyens de déverrouillage. Le déverrouillage est réalisé en introduisant dans la troisième fente un objet de forme adaptée pour permettre l'accès aux moyens de déverrouillage.

Pour permettre de retenir une sangle de ceinture introduite sur toute sa largeur lorsqu'elle est introduite dans la première fente, la première aile présente avantageusement un rebord s'étendant à partir du bord dans lequel débouche la première fente, ledit rebord étant disposé du côté de la première fente opposé à la seconde aile et s'étendant à partir de la première aile dans une direction opposée à la seconde direction.

Pour s'adapter à la forme des gâches de système de verrouillage de ceinture de sécurité, il est avantageusement prévu que la seconde aile présente une forme sensiblement rectangulaire, présentant un premier bord correspondant à la ligne de jonction. Dans cette forme de réalisation, on peut aussi prévoir que la seconde aile présente au moins un rebord s'étendant à partir d'au moins l'un de ses trois bords distincts de son premier bord dans une direction opposée à la première direction.

Une forme de réalisation avantageuse prévoit que la troisième fente est de largeur moindre par rapport à la deuxième fente. Ladite troisième fente peut présenter en son centre une ouverture circulaire d'un diamètre compris entre 8 et 12 mm. Ainsi, un crayon ou un stylo peut être utilisé pour passer à travers la troisième fente et accéder à un bouton de déverrouillage se trouvant sous la seconde aile.

Un dispositif tel que décrit ci-dessus est avantageusement réalisé d'une seule pièce en matière synthétique injectée. Cela permet d'avoir une pièce relativement légère et facile à manipuler.

Pour faciliter l'utilisation du dispositif et rendre celle-ci plus intuitive, il est proposé de réaliser le dispositif selon l'invention dans un matériau transparent.

En option, pour permettre de s'adapter au mieux aux divers systèmes de verrouillage du marché, il est prévu avantageusement que le dispositif comporte un réducteur destiné à réduire l'ouverture réalisée par la deuxième fente dans la seconde aile, la deuxième fente et/ou le réducteur présentant des moyens permettant un emboitement du réducteur dans la deuxième fente. Avantageusement, on peut alors prévoir que la deuxième fente réduite par le réducteur et l'ouverture de la troisième fente présentent sensiblement une même largeur et une même longueur.

Des détails et avantages de la présente invention apparaitront mieux de la description qui suit, faite en référence au dessin schématique annexé sur lequel :
La figure 1 est une vue en perspective d'un dispositif de sécurité selon la présente invention,
La figure 2 est une vue en perspective sous un angle différent du dispositif de la figure 1,
La figure 3 illustre à échelle agrandie et en perspective un réducteur destiné à coopérer avec le dispositif des figures 1 et 2,
La figure 4 illustre le réducteur de la figure 3 en perspective mais sous un autre angle de vue,
La figure 5 illustre une clé spéciale destinée à être utilisée en coopération avec le dispositif des figures 1 et 2, et
Les figures 6 et 7 illustrent des étapes de mise en oeuvre d'un dispositif de sécurité illustré sur la figure 1.

Un dispositif selon la présente invention présente deux ailes qui s'étendent dans des directions différentes. Dans la forme de réalisation préférée illustrée sur le dessin, le dispositif comporte une première aile 2 et une seconde aile 4, toutes deux sensiblement planes et s'étendant en faisant un angle légèrement obtus l'une par rapport à l'autre. De préférence, l'angle formé entre les deux ailes est compris entre 45° et 135°, de manière encore plus préférée, entre 100° et 115°. En première approche, les ailes apparaissent sensiblement perpendiculaires l'une par rapport à l'autre. On supposera ainsi dans la suite de la description que la première aile 2 s'étend selon une direction sensiblement verticale et que la seconde aile 4 s'étend selon une direction horizontale, la première aile 2 se trouvant au-dessus de la seconde aile 4. On définit de la sorte une orientation afin de faciliter la description qui suit.

La première aile 2 est reliée à la seconde aile 4 par une pliure définissant une ligne de jonction 6.

Le dispositif de sécurité est de préférence réalisé en matière synthétique par injection mais il apparaitra à l'homme du métier que d'autres matériaux sont envisageables pour réaliser cette pièce. On pourrait ainsi aussi envisager de réaliser ce dispositif par découpe et pliage d'une tôle.

La première aile 2 est représentée comme étant sensiblement plane et présente sur les figures un contour arrondi à la fois esthétique et non agressif pour un utilisateur. Elle présente une première fente 8 qui s'étend parallèlement à la ligne de jonction 6 et vient déboucher dans un bord de la première aile 2. Un rebord 10 est réalisé au-dessus de la première fente 8 à partir du bord dans lequel la première fente 8 débouche. Ce rebord 10 s'étend dans une direction opposée à la direction dans laquelle s'étend la seconde aile 4.

La seconde aile 4 présente de préférence une forme rectangulaire. En effet, cette forme correspond à la forme de la grande majorité des gâches de système de verrouillage de ceintures de sécurité de véhicules automobiles (aussi bien les voitures particulières que les cars ou autres destinés au transport de passagers). La seconde aile 4 est destinée à venir recouvrir la face d'une gâche d'un tel système de verrouillage, face présentant une ouverture pour recevoir un pêne monté coulissant sur une sangle de la ceinture de sécurité.

On remarque sur les figures la présence dans la seconde aile de deux fentes, non débouchantes dans un bord de la seconde aile. On a ainsi une deuxième fente 12 qui est ici de forme globale rectangulaire très allongée, c'est-à-dire avec une longueur très supérieure à sa largeur, par exemple au moins dix fois supérieure. Cette deuxième fente 12 s'étend sensiblement parallèlement à la ligne de jonction 6.

L'autre fente de la seconde aile, appelée troisième fente 14, est elle aussi sensiblement parallèle à la ligne de jonction 6 mais elle est plus éloignée de cette ligne de jonction 6 que la deuxième fente 12. Dans la forme de réalisation préférée illustrée sur le dessin, la troisième fente 14 présente elle aussi une forme de rectangle très allongé, avec une largeur qui est de préférence moindre par rapport à la largeur de la deuxième fente 12. Cette largeur est par exemple de l'ordre du millimètre (1 à 3 mm). Cette forme rectangulaire allongée est par exemple adaptée pour permettre le passage d'une clé de voiture ou bien d'une carte plastifiée de type carte de crédit. On remarque en outre au centre de la fente une ouverture circulaire 16, superposée à la fente. Cette ouverture est par exemple d'un diamètre de l'ordre de 10 mm (par exemple entre 8 et 12 mm) et est destinée à permettre le passage d'un corps de crayon ou de stylo. La troisième fente 14 et l'ouverture circulaire 16 sont conçues de telle sorte qu'il ne soit pas possible, même pour un enfant, d'introduire un doigt à travers le passage formé par cette fente et cette ouverture.

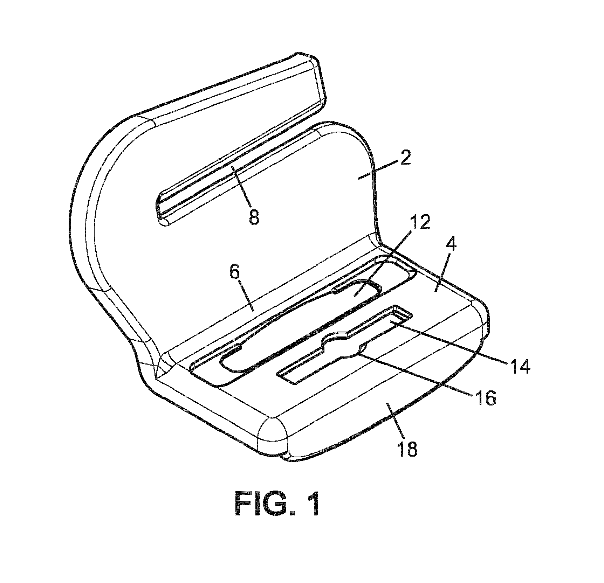

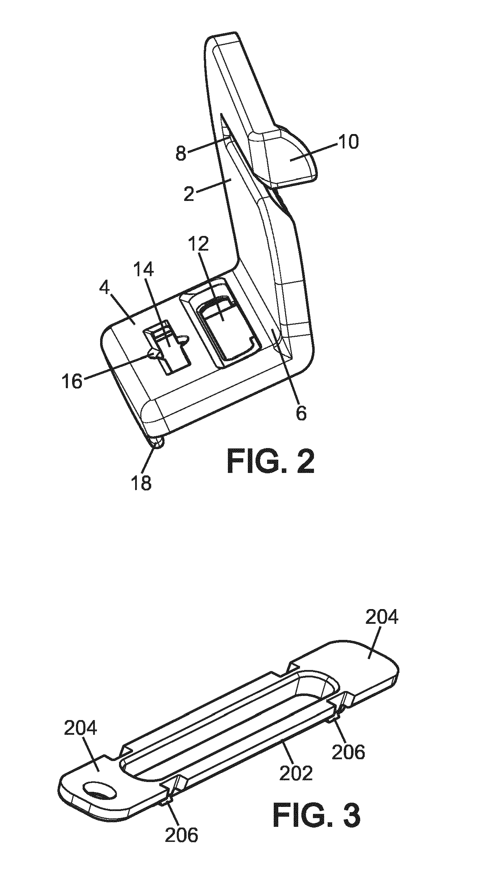

Dans la forme de réalisation des figures 1 et 2, la seconde aile 4 est munie d'un rabat 18 orienté vers le bas. Ce rabat 18 s'étendent à partir du bord de la seconde aile 4 (de forme rectangulaire dans les formes de réalisation illustrées) opposé à la ligne de jonction 6. Ce rabat 18 a pour but de donner une forme enveloppante de manière à pouvoir venir coiffer la face d'une gâche destinée à recevoir un pêne dans un système de verrouillage de ceinture de sécurité.

La forme de réalisation des figures avec un seul rabat 18 correspond à une forme de réalisation préférée mais en variante de réalisation, on pourrait prévoir d'autres rabats, soit sur l'un, soit sur les deux autres bords de la seconde aile 4. On pourrait également envisager une forme de réalisation ne présentant pas de rabats, par exemple lorsque la gâche du système de verrouillage est entièrement encastrée dans l'assise du siège.

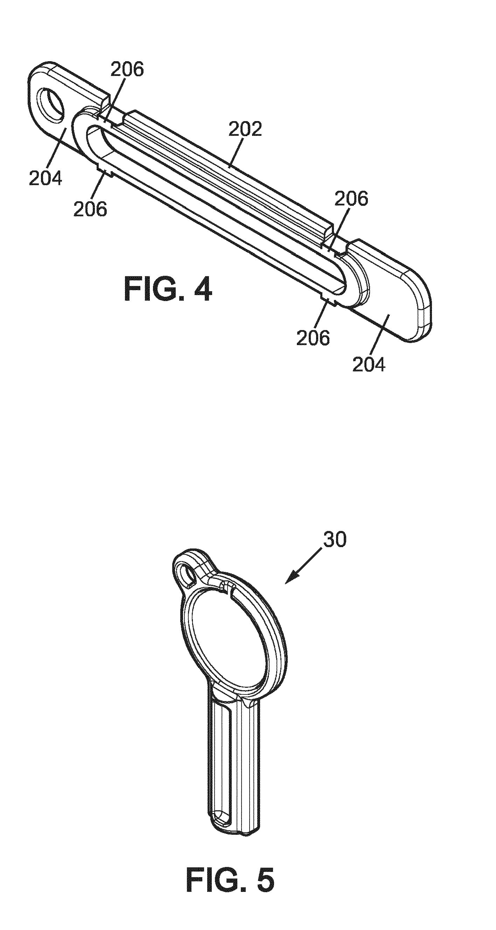

Il est également prévu d'adapter le dispositif selon l'invention, dans une forme de réalisation avantageuse, au pêne du système de verrouillage. Il est proposé ici en option un réducteur 20 (figures 3 et 4) destiné à coopérer avec la deuxième fente 12. Ce réducteur 20 vient se loger dans la deuxième fente de manière à réduire le passage laissé libre par la deuxième fente 12.

Le réducteur 20 se présente par exemple sous la forme d'une pièce présentant un évidement central allongé avec un rebord périphérique 202 sur sa partie supérieure. La largeur de ce rebord périphérique 202 est faible sur les côtés longitudinaux et plus importante aux extrémités si bien que le rebord périphérique 202 forme des oreilles 204 à ses extrémités. La surface extérieure périphérique de la partie tubulaire est adaptée à la surface intérieure de la deuxième fente 12. On retrouve dans le réducteur 20 une fente allongée. Pour permettre le maintien du réducteur 20 dans la deuxième fente 12, des ergots 206 sont prévus sur le réducteur 20 pour coopérer avec la face inférieure de la seconde aile 4. Il est ici aussi prévu que les deux oreilles 204 du réducteur 20 viennent prendre place chacune dans un logement en creux réalisé dans la face supérieure de la seconde aile 4 aux extrémités de la deuxième fente 12.

Bien entendu, d'autres formes de réalisation permettent à l'homme du métier de venir réduire le passage d'une fente telle la seconde fente de manière amovible ou non.

Il est prévu d'utiliser le réducteur 20 dès que c'est possible. En effet, il est préférable d'avoir une fente réduite pour limiter les risques d'introduction de doigts ou d'objets divers dans le système de verrouillage. On peut prévoir que la fente définie dans le réducteur 20 corresponde sensiblement dans ses dimensions à la troisième fente. Le réducteur 20 pourra être retiré de la deuxième fente 12 s'il venait à gêner l'introduction du pêne dans la gâche du système de verrouillage. En le retirant, on réalise un gain de course du pêne dans la gâche qui permet à coup sûr un bon verrouillage.

Le dispositif décrit ci-dessus peut alors être utilisé comme décrit ci-après.

De manière habituelle pour verrouiller une ceinture de sécurité, l'utilisateur vient tout d'abord approcher le pêne du système de verrouillage de la gâche correspondante. En fonction de la morphologie du passager, le pêne 22 sera positionné d'une certaine manière par rapport à la sangle 24 de la ceinture de sécurité.

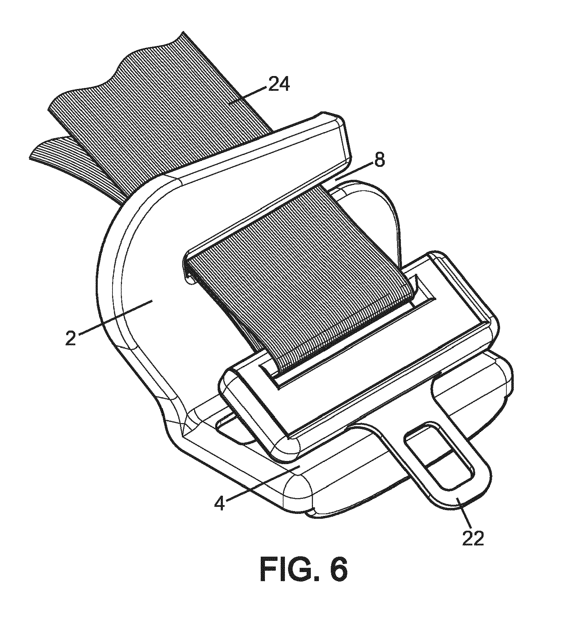

Il est alors prévu d'introduire dans la première fente 8 les deux brins de la sangle 24 qui partent du pêne 22 (figure 6). La première fente 8 est assez profonde pour permettre l'introduction des brins de la sangle 24 sur toute leur largeur. Le rebord 10 permet ensuite d'éviter que les brins de la sangle ne sortent involontairement de cette première fente 8.

Le pêne 22 peut alors être introduit dans la deuxième fente 12. Le dispositif selon la présente invention est alors solidarisé de la sangle 24 et du pêne 22. La position relative du pêne 22 sur la sangle 24 avec le dispositif peut être conservée lors de plusieurs verrouillages et déverrouillages successifs. Ainsi, si un même passager vient prendre place pour plusieurs voyages toujours sur le même siège, il est inutile de répéter l'opération de réglage et de solidarisation du dispositif sur la sangle 24 à chaque fois.

Pour réaliser le verrouillage de la ceinture de sécurité, il suffit alors d'approcher l'ensemble formé par le pêne 22 et le dispositif de la gâche 26 correspondante et ensuite d'introduire le pêne 22 de manière classique dans la gâche 26 jusqu'à réaliser un enclenchement réalisant le verrouillage.

Ces diverses opérations sont facilitées si le dispositif selon l'invention est réalisé dans un matériau transparent. Il devient en effet plus pratique de verrouiller le système de verrouillage car la gâche n'est pas cachée de la vue de l'opérateur pendant l'opération de fermeture.

De manière habituelle, le déverrouillage du système est réalisé en venant appuyer sur un bouton de déverrouillage (non illustré car caché sur les différentes vues). La seconde aile 4 (avec éventuellement un ou plusieurs rabat(s) 18) vient limiter l'accès à ce bouton de déverrouillage, et notamment empêcher d'y accéder avec ses doigts, sans utiliser un "outil".

La troisième fente 14 est prévue pour permettre d'accéder au bouton de déverrouillage avec un outil qui est avantageusement une clé 28, par exemple une clé de véhicule automobile. Certains véhicules ne sont plus équipés de clé mécaniques classiques mais fonctionnent avec une carte électronique qui reprend le format sensiblement d'une carte de crédit plastifiée. La troisième fente 14 est prévue pour permettre le passage de tels objets qui sont normalement à portée de main quand on voyage en voiture.

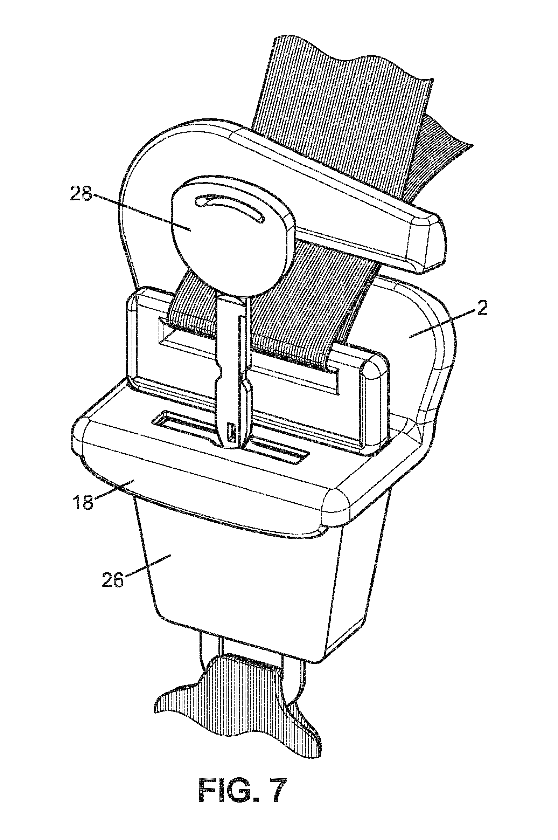

La figure 7 illustre ainsi une opération de déverrouillage. Ici une clé 28 est utilisée pour accéder au bouton de déverrouillage et agir sur celui-ci afin de déverrouiller le système.

La figure 5 illustre une clé spéciale 30 particulièrement adaptée à la troisième fente 14 et qui peut être commercialisée dans un kit qui comprendrait le dispositif, le réducteur et cette clé spéciale 30.

On remarque que dans une forme de réalisation préférée, la troisième fente 14 a sensiblement les mêmes dimensions que l'ouverture réalisée dans le réducteur 20, ouverture appelée à recevoir le pêne du système de verrouillage. Ainsi, un pêne de verrouillage de ceinture de sécurité peut être utilisé pour déverrouiller le système de verrouillage. De ce fait, si la clé spéciale 30 est, ne serait-ce que momentanément, égarée, il est possible d'utiliser le pêne d'une ceinture de sécurité voisine pour déverrouiller le système de verrouillage à travers le dispositif selon l'invention.

Comme il ressort de la description qui précède, le dispositif (dans ses diverses formes de réalisation) présente de nombreux avantages.

Le dispositif peut être réalisé d'une seule pièce (plus le réducteur qui est cependant optionnel) et ne nécessite pas beaucoup de matière première. Il est avantageusement réalisé en matière synthétique. Il peut alors être réalisé en une seule opération industrielle (moulage par injection). Cependant, une réalisation en tôle peut raisonnablement être envisagée car elle peut être entièrement automatisée.

Le dispositif proposé est peu encombrant. Cela participe à son ergonomie car de ce fait il est facilement manipulable. Un autre avantage est qu'il peut aussi facilement être laissé dans le véhicule dans lequel il a été utilisé qu'emporté pour être utilisé dans un autre véhicule.

Comme il ressort du mode d'emploi décrit, l'utilisation de ce dispositif est simple et intuitive. Avec les variantes proposées, il peut s'adapter à toutes les ceintures de sécurité du marché. En effet, il est possible de s'adapter d'un côté au pêne de verrouillage et d'un autre côté à la gâche destinée à le recevoir.

Le dispositif peut rester en place sur la ceinture de sécurité. Il n'a pas besoin d'être monté puis démonté à chaque utilisation. Si la ceinture de sécurité sur laquelle le dispositif est monté est utilisée par un même passager à chaque voyage, le dispositif est réglé une fois pour toutes. Ceci est notamment permis grâce au blocage sur la sangle de la ceinture qui est réalisé par la première fente qui vient maintenir ensemble deux brins de la sangle et au passage du pêne dans la deuxième fente.

La présente invention ne se limite pas aux formes de réalisation préférées décrites ci-dessus et illustrées sur le dessin. Elle concerne également les variantes de réalisation évoquées et celles à la portée de l'homme du métier dans le cadre des revendications ci-après.

## Revendications

1. Dispositif pour ceinture de sécurité, **caractérisé en ce qu'**il comporte :
- une première aile (2) s'étendant selon une première direction,
- une seconde aile (4) s'étendant selon une seconde direction sensiblement perpendiculaire à la première direction,
- une ligne de jonction (6) entre la première aile (2) et la seconde aile (4),
- une première fente (8) réalisée dans la première aile (2), ladite première fente (8) étant sensiblement parallèle à la ligne de jonction (6) et débouchant dans un bord de la première aile (2),
- une deuxième fente (12) réalisée dans la seconde aile (4), ladite deuxième fente (12) étant sensiblement parallèle à la ligne de jonction (6), et
- une troisième fente (14) également réalisée dans la seconde aile (4), sensiblement parallèle à la deuxième fente (12) et plus éloignée de la ligne de jonction (6) que la deuxième fente (12).

2. Dispositif selon la revendication 1, **caractérisé en ce que** la première aile (2) présente un rebord (10) s'étendant à partir du bord dans lequel débouche la première fente, ledit rebord étant disposé du côté de la première fente opposé à la seconde aile et s'étendant à partir de la première aile dans une direction opposée à la seconde direction.

3. Dispositif selon l'une des revendications 1 ou 2, **caractérisé en ce que** la seconde aile (4) présente une forme sensiblement rectangulaire, présentant un premier bord correspondant à la ligne de jonction (6).

4. Dispositif selon les revendications 2 et 3, **caractérisé en ce que** la seconde aile (4) présente au moins un rebord (18) s'étendant à partir d'au moins l'un de ses trois bords distincts de son premier bord dans une direction opposée à la première direction.

5. Dispositif selon l'une des revendications 1 à 4, **caractérisé en ce que** la troisième fente (14) est de largeur moindre par rapport à la deuxième fente (12).

6. Dispositif selon l'une des revendications 1 à 5, **caractérisé en ce que** la troisième fente (14) présente en son centre une ouverture circulaire (16) d'un diamètre compris entre 8 et 12 mm.

7. Dispositif selon l'une des revendications 1 à 6, **caractérisé en ce qu'**il est réalisé d'une seule pièce en matière synthétique injectée.

8. Dispositif selon l'une des revendications 1 à 7, **caractérisé en ce qu'**il est réalisé dans un matériau transparent.

9. Dispositif selon l'une des revendications 1 à 8, **caractérisé en ce qu'**il comporte un réducteur (20) destiné à réduire l'ouverture réalisée par la deuxième fente (12) dans la seconde aile (4), la deuxième fente (12) et/ou le réducteur (20) présentant des moyens permettant un emboitement du réducteur (20) dans la deuxième fente (12).

10. Dispositif selon la revendication 9, **caractérisé en ce que** l'ouverture de la deuxième fente réduite par le réducteur et l'ouverture de la troisième fente présentent sensiblement une même largeur et une même longueur.
